# EUROPEAN PATENT SPECIFICATION

(11) **EP 3 531 652 B1**
(45) Date of publication and mention of the grant of the patent: **19.02.2025**
(21) Application number: 18200079.4
(22) Date of filing: 12.10.2018
(51) Int. Cl.: H04L 9/40

(54) **UTILITY METER, SERVER, AND EXTERNAL DISPLAY SYSTEM HAVING ENCRYPTION AND DECRYPTION COMMUNICATION FUNCTION, AND METHOD OF COMMUNICATING METER DATA**
VERBRAUCHSZÄHLER, SERVER UND EXTERNES ANZEIGESYSTEM MIT FUNKTION ZUR VERSCHLÜSSELUNG UND ENTSCHLÜSSELUNG DER KOMMUNIKATION UND VERFAHREN ZUR KOMMUNIKATION VON ZÄHLERDATEN
COMPTEUR DE SERVICES, SERVEUR ET SYSTÈME D'AFFICHAGE EXTERNE POSSÉDANT UNE FONCTION DE COMMUNICATION DE CRYPTAGE ET DE DÉCRYPTAGE ET PROCÉDÉ DE COMMUNICATION DE DONNÉES DE COMPTEUR

(30) Priority: 23.02.2018 KR 20180021743
(43) Date of publication of application: 28.08.2019
(73) Proprietor: Korea Institute of Energy Research, Daejeon 34129 (KR)
(72) Inventor: LEE, Jae Yong, Daejeon 34138 (KR); CHOI, Jae Joon, Daejeon 34140 (KR); YIM, Tae Su, Daejeon 35314 (KR); SHIM, Soo Taek, Gyeonggi-do (KR); PARK, Jin Soo, Seoul 04917 (KR)
(74) Representative: Brevalex

(56) References cited:
- CHAITANYA DANDUGULA: "Networking for Smart Meters", 19 June 2012 (2012-06-19), Stockholm, Sweden, XP055568791, Retrieved from the Internet <URL:https://people.kth.se/~maguire/DEGREE-PROJECT-REPORTS/120619-Chaitanya_Dandugula-with-cover.pdf> [retrieved on 20190313]
- RESCORLA RTFM E ET AL: "Datagram Transport Layer Security Version 1.2; rfc6347.txt", DATAGRAM TRANSPORT LAYER SECURITY VERSION 1.2; RFC6347.TXT, INTERNET ENGINEERING TASK FORCE, IETF; STANDARD, INTERNET SOCIETY (ISOC) 4, RUE DES FALAISES CH- 1205 GENEVA, SWITZERLAND, 21 January 2012 (2012-01-21), pages 1 - 32, XP015081400
- ANONYMOUS: "Advanced Encryption Standard - Wikipedia", 14 February 2018 (2018-02-14), XP055568852, Retrieved from the Internet <URL:https://en.wikipedia.org/w/index.php?title=Advanced_Encryption_Standard&oldid=825572045> [retrieved on 20190313]
- THOMAS KOTHMAYR ET AL: "A DTLS based end-to-end security architecture for the Internet of Things with two-way authentication", 37TH ANNUAL IEEE CONFERENCE ON LOCAL COMPUTER NETWORKS -- WORKSHOPS, 1 October 2012 (2012-10-01), pages 956 - 963, XP055568944, ISBN: 978-1-4673-2128-0, DOI: 10.1109/LCNW.2012.6424088

## Description

### BACKGROUND OF THE INVENTION

### 1. Field of the invention

The present disclosure relates to technology for encrypting a communication message of a utility meter.

### 2. Description of the Prior Art

Utility meters includes a water meter, a gas meter, a heat meter, and a hot water meter which measure an amount of the use of water, gas, heat, and hot water and are generally installed in each household of an apartment building or in individual houses.

Such utility meters may periodically or aperiodically transmit meter data to the server by a remote meter reading service. However, a communication protocol generally used at present to transmit/receive meter data does not use an encryption technique, so that problems may occur such as falsification of bills or illegal collection of personal information by a third party, for example, whether there is a damage.

Meanwhile, the utility meter is designed to operate for several years with only a battery through high-level technology, and thus uses low specification hardware consuming a very small amount of power, for example, a computing processor or a memory and it is difficult to apply a generally known encryption technology to the current communication protocol.

Reference is also made to the article by Chaitanya Dandugula : "Networking for smart maters", June 19, 2012.

### SUMMARY OF THE INVENTION

In this background, an aspect of the present disclosure is to provide technology for encrypting a communication message of a utility meter. Another aspect of the present disclosure is to provide technology for performing high-level encryption on necessary data with a small amount of calculations to be suitable for hardware specifications of the utility meter.

In accordance with an aspect of the present invention, a utility meter reading system according to claim 1 is provided.

The first request message may include a first message block indicating a type of requested information and a second message block indicating a location of a household in which the utility meter is installed, and the first message block and the second message block may be included in the first interval.

The first request message may include a third message block indicating a type of the utility meter and a fourth message block including time information, and the third message block and the fourth message block may be included in the first interval.

The first request message may further include a checksum value for a third interval including the first interval, and the controller may determine whether the encrypted request message has errors through the checksum value included in the third interval of the reconstructed message.

When it is determined that the encrypted request message is abnormal, the controller may increase a pre-initialized count and, when the count exceeds a predetermined value, provide an alarm to the server or outside

The unidirectional encryption algorithm may be an algorithm using a hash function.

The unidirectional encryption algorithm may be one of Message-Digest algorithm 5 (MD5), Secure Hash Algorithm (SHA), bcrypt, Password-Based Key Derivation Function2 (PBKDF2), and scrypt.

The server may generate the encrypted request message by performing an XOR operation on the second request message and N1 (N1 being a natural number) symmetric keys.

The two or more different bitwise operations may include bit movement of shifting each of a predetermined number of bits in one direction and bit transposition of relocating a location of each bit in a predefined order.

The two or more different bitwise operations may include at least two bitwise operations among an XOR operation, bit movement of shifting each of a predetermined number of bits in one direction, and bit transposition of relocating each bit in a predefined order.

The server may insert only L (L being a natural number) characters in the first encrypted character string into the second interval.

The second request message may include a start character and an end character, and the server may generate the encrypted request message by performing a bitwise operation on remaining parts other than the start character and the end character.

In accordance with another aspect of the present invention, a method of communicating meter data according to claim 14 is provided.

The method may further include: generating a first meter reading message by inserting a result of a function requested by the first reconstructed message into the meter data by the utility meter; generating a third encrypted character string by encrypting a part corresponding to an interval 1-2 in the first meter reading message through the unidirectional encryption algorithm by the utility meter; generating a second meter reading message by inserting all or some of the third encrypted character string into an interval 2-2 in the first meter reading message by the utility meter; generating an encrypted meter reading message by performing the bitwise operation on a part of the second meter reading message M2 (M2 being a natural number) times according to a second sequence by the utility meter; and transmitting the encrypted meter reading message to the server by the utility meter.

The method may further include: generating a second reconstructed message by inversely performing the bitwise operation on the encrypted meter reading message M2 times according to a second inverse sequence opposing the second sequence by the server; generating a fourth encrypted character string by encrypting the part corresponding to the interval 1-2 in the second reconstructed message through the unidirectional encryption algorithm by the server; determining whether the encrypted meter reading message is normal by comparing a second character string to be compared corresponding to the interval 2-2 in the second reconstructed message with all or some of the fourth encrypted character string by the server; and processing the meter data included in the second reconstructed message by the server when the encrypted meter reading message is normal.

As described above, according to the present embodiment, a communication message of the utility meter can be encrypted. Further, according to the present embodiment, it is possible to perform high-level encryption on necessary data with a small amount of calculations to be suitable for hardware specifications of the utility meter.

### BRIEF DESCRIPTION OF THE DRAWINGS

The above and other aspects, features and advantages of the present disclosure will be more apparent from the following detailed description taken in conjunction with the accompanying drawings, in which:
FIG. 1 is a diagram illustrating a meter reading system according to an embodiment;
FIG. 2 is a block diagram illustrating a utility meter according to an embodiment;
FIG. 3 is a block diagram illustrating a server according to an embodiment;
FIG. 4 is a flowchart illustrating a process of transmitting and receiving a request message according to an embodiment;
FIG. 5 is a flowchart illustrating a process of transmitting and receiving a meter reading message according to an embodiment;
FIG. 6 illustrates a plain text protocol of the request message and the meter reading message according to an embodiment;
FIG. 7 is a flowchart illustrating an encryption process according to an embodiment;
FIG. 8 is a flowchart illustrating a decryption process according to an embodiment;
FIG. 9 illustrates symmetric encryption and decryption according to an embodiment;
FIG. 10 illustrates a logical table of an XOR operation;
FIG. 11 illustrates a process of comparing encrypted character strings according to an embodiment;
FIG. 12 is a diagram illustrating the meter reading system according to another embodiment;
FIG. 13 is a block diagram illustrating the utility meter according to another embodiment;
FIG. 14 is a block diagram illustrating the server according to another embodiment;
FIG. 15 is a block diagram illustrating the external display system according to another embodiment;
FIG. 16 is a flowchart illustrating the process of transmitting the request message according to another embodiment; and
FIG. 17 is a flowchart illustrating the process of transmitting the meter reading message according to another embodiment.

### DETAILED DESCRIPTION OF THE EXEMPLARY EMBODIMENTS

Hereinafter, embodiments of the present disclosure will be described in detail with reference to the accompanying drawings. In adding reference numerals to elements in each drawing, the same elements will be designated by the same reference numerals, if possible, although they are shown in different drawings. Further, in the following description of the present disclosure, a detailed description of known functions and configurations incorporated herein will be omitted when it is determined that the description may make the subject matter of the present disclosure rather unclear.

In addition, terms, such as first, second, A, B, (a), (b) or the like may be used herein when describing components of the present disclosure. These terms are merely used to distinguish one structural element from other structural elements, and a property, an order, a sequence and the like of a corresponding structural element are not limited by the term. It should be noted that if it is described in the specification that one component is "connected," "coupled" or "joined" to another component, a third component may be "connected," "coupled," and "joined" between the first and second components, although the first component may be directly connected, coupled or joined to the second component.

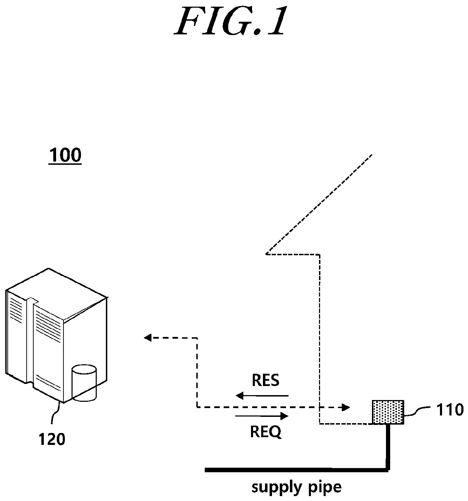

FIG. 1 is a diagram illustrating a meter reading system according to an embodiment.

Referring to FIG. 1, a meter reading system 100 may include a utility meter 110 and a server 120.

The utility meter 110 may read an amount of the use of utilities in the household and transmit meter data to the server 120. The utilities may be water, gas, heating, and hot water supplied through supply pipes in the form of a fluid. A water meter for reading an amount of used water, a gas meter for reading an amount of used gas, a heat meter for reading an amount of used heat, and a hot water meter for reading an amount of used hot water may be referred to as the utility meter.

The server 120 may receive meter data from the utility meter 110 and issue a bill for the amount of used utilities in each household based on the received meter-read data or notify an amount of meter reading to the user in each household.

The server 120 and the utility meter 110 may be connected through communication based on remote meter reading service technology and transmit and receive meter data. Communication may be wired communication or wireless communication. For communication, a relay may intervene between the server 120 and the utility meter 110 or the following external display system may intervene. At this time, some intervals of the communication may be wired communication and other intervals may be wireless communication.

The server 120 may make a request for reading meters by transmitting a request message (REQ) to the utility meter 110, and the utility meter 110 may generate a meter reading message (RES) corresponding to the request message (REQ) and transmit the generated meter reading message (RES) to the server 120. In some embodiments, the utility meter 110 may periodically or aperiodically generate and transmit the meter reading message (RES) without transmitting the request message (REQ).

The utility meter 110 may detect the content in the request message (REQ) from the server 120 by reading the request message (REQ) in plain text. The plain text is a protocol pre-regulated without encryption and consists of, for example, characteristic prescribed in ASCII table. The ASCII table defines a total of 255 characters through 8-bit characters, wherein a 0^{th} character means NUL and Arabic numerals 0 to 9 are defined by a 48^{th} character to a 57^{th} character. In the ASCII table, STX that means a start character may be defined by a 2^{nd} character and ETX that means an end character may be defined by a 3^{rd} character, and alphabet characters may be defined by 65 to 90^{th} characters and 97 to 122^{nd} characters.

The server 120 may also identify meter data by reading the meter reading message (RES) in the plain text.

Meanwhile, since the plain text is not encrypted, users other than a manager who manages meter reading can easily obtain the content. For example, the meter reading message (RES) may have the form such as "1203WAT1111" in the plain text. If a user other than the manager knows that "1203" means a particular household, "WAT" means water, and "1111" means an amount of meter reading through a periodic observation, it may introduce risks in that personal information is leaked and also a charge is manipulated.

The meter reading system 100 according to an embodiment may solve the above-described problems by encrypting the request message (REQ) which the server 120 transmits to the utility meter 110 and/or the meter reading message (RES) which the utility meter 110 transmits to the server 120. Further, the meter reading system 100 according to an embodiment applies an encryption method having a small amount of calculations in consideration of a hardware limit of the utility meter 110.

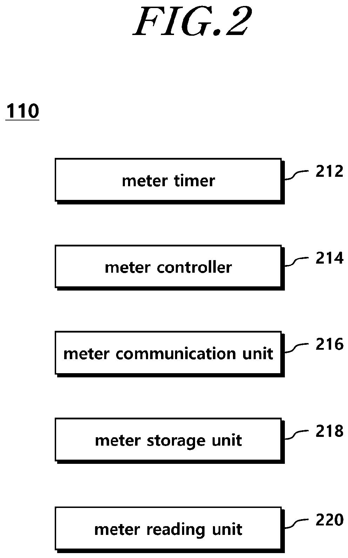

FIG. 2 is a block diagram illustrating the utility meter according to an embodiment.

Referring to FIG. 2, the utility meter 110 may include a meter timer 212, a meter controller 214, a meter communication unit 216, a meter storage unit 218, and a meter reading unit 220.

The meter timer 212 may be called a timer, the meter controller 214 may be called a controller, the meter communication unit 216 may be called a communication unit, the meter storage unit 218 may be called a storage unit, the meter reading unit 220 may be called a reading unit but, hereinafter, the modifier "meter" is added before a name of each element in order to prevent confusion with elements of the server.

The meter timer 212 is an element for generating time and may synchronize a timer of the server 120 and time.

The meter controller 214 may perform all controls of the utility meter 110. In the following description, it is understood that unless an element performing an operation is specified, the operation is performed by the meter controller 214.

The meter controller 214 may decrypt a received encrypted request message, identify request information included in the decrypted request message, and perform a function corresponding to the request information. The meter controller 214 may insert a result of the function corresponding to the request information into a meter reading message, and encrypt the meter reading message.

The meter communication unit 216 is an element for performing communication and may receive the encrypted request message from the server and transmit the encrypted meter reading message to the server.

The meter storage unit 218 may store meter data and store a key (KEY) required for encryption or setting matters. In the following description, the expression of presetting a particular element may be understood that such settings are stored in the meter storage unit 218.

The meter reading unit 220 is an element for reading an amount of the use of utilities, and an amount of meter reading may have an instantaneous value or an accumulated value.

The meter reading unit 220 may measure not only the amount of the use of utilities but also states of the utilities. For example, the meter reading unit 220 may measure temperature and a flow rate. The meter reading unit 220 may calculate a quantity of heat based on a value generated by measuring temperature or the flow rate. When the quantity of heat is a target to be read, the meter reading unit 220 may read the quantity of heat through such a process.

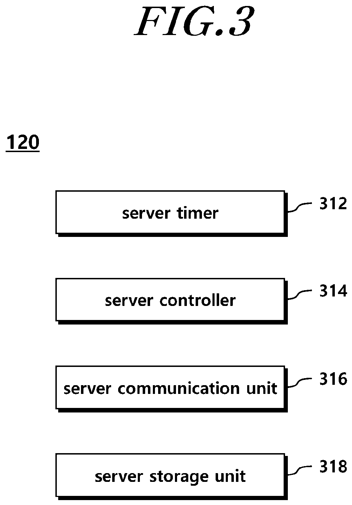

FIG. 3 is a block diagram illustrating the server according to an embodiment.

Referring to FIG. 3, the server 120 may include a server timer 312, a server controller 314, a server communication unit 316, and a server storage unit 318.

The server timer 312 may be called a timer, the server controller 314 may be called a controller, the server communication unit 316 may be called a communication unit, and the server storage unit 318 may be called a storage unit but, hereinafter, the modifier "server" may be added before a name of each element in order to prevent confusion with the elements of the utility meter.

The server timer 312 is an element for generating time and may synchronize the timer of the utility meter 110 and time.

The server controller 314 may perform all controls of the server 120. In the following description, it may be understood that unless an element performing an operation is specified, the operation is performed by the server controller 314.

The server controller 314 may decrypt a received encrypted meter reading message and identify meter data included in the decrypted meter reading message. The server controller 314 may generate request information for making a request to the utility meter, insert the request information into a request message, and encrypt the request message.

The server communication unit 316 is an element for performing communication, and may receive the encrypted meter reading message from the utility meter and transmit the encrypted request message to the utility meter.

The server storage unit 318 may store meter data and also store a key (KEY) required for encryption or setting matters. In the following description, the expression of presetting a particular element may be understood that such settings are stored in the server storage unit 318.

In other words, in accordance with an aspect of the present disclosure, a server is provided, which includes: a communication unit configured to receive an encrypted meter reading message from a utility meter configured to generate a first meter reading message including meter data, generate a first encrypted character string by encrypting a part corresponding to a first interval in the first meter reading message through a unidirectional encryption algorithm, generate a second meter reading message by inserting all or some of the first encrypted character string into a second interval in the first meter reading message, and generate the encrypted metering reading message by performing a bitwise operation on a part of the second meter reading message M2 (M2 being a natural number) times according to a second sequence; a controller configured to generate a reconstructed message by inversely performing the bitwise operation on the part of the encrypted metering reading message M2 times according to a second inverse sequence opposing the second sequence, generate a second encrypted character string by encrypting the part corresponding to the first interval in the reconstructed message through the unidirectional encryption algorithm, compare a character sting to be compared corresponding to a second interval in the reconstructed message with all or some of the second encrypted character string, and extract the meter reading message from the reconstructed message when it is determined that the encrypted meter reading message is normal; and a storage unit configured to store meter reading information included in the meter data.

The second meter reading message may include a start character and an end character, and the utility meter may generate the encrypted meter reading message by performing a bitwise operation on remaining parts other than the start character and the end character, and the controller may identify a length of the encrypted meter reading message by recognizing the start character and the end character of the encrypted meter reading message.

The reconstructed message may include a message length block, and the controller may determine whether the encrypted meter reading message has errors by comparing a length of the encrypted meter reading message identified through the start character and the end character with a message length included in the message length block.

When it is determined that the encrypted meter reading message is abnormal, the controller may increase a pre-initialized count and, when the count exceeds a predetermined value, provide an alarm to a user terminal corresponding to the utility meter.

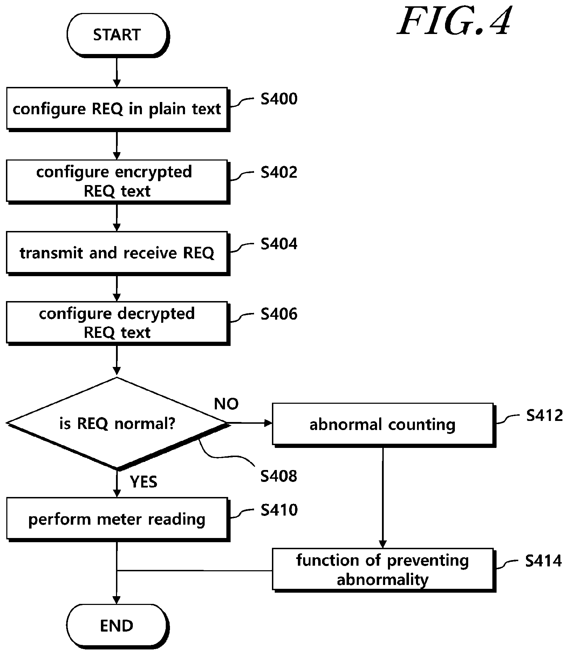

FIG. 4 is a flowchart illustrating a process of transmitting and receiving a request message according to an embodiment.

Referring to FIG. 4, the server may configure a request message in plain text in S400.

The server may generate a first request message. The first request message may include utility meter-specific information that specifying a utility meter. The utility meter-specific information may include, for example, household location information indicating a household location and ID information indicating an ID of a utility meter within each household.

The first request message may further include request information. The request information may include, for example, information type indication information indicating a type of requested information such as a flow rate, temperature, and a quantity of heat and utility type indication information indicating a type of the requested utility such as a water meter, a gas meter, a heat meter, and a hot water meter.

The first request message may further include a data block. In the data block, time information on a time point at which the first request message is generated may be recorded or time information on a time point at which meter data is generated, that is, a time point at which meter data to be transmitted by the utility meter may be recorded.

Information inserted into the first request message may be inserted into a block in a particular location (interval). For example, the information type indication information may be inserted into a first message block of the first request message, the household location information may be inserted into a second message block, the utility type indication information may be inserted into a third message block, and the time information may be inserted into a fourth message block (data block).

A random character string consisting of random numbers generated by arbitrary numbers may be further inserted into the first request message. For example, the random character string may be inserted into a random character string block following the fourth message block.

The first request message may further include a checksum value.

The first request message may further include an encrypted character string by which falsification by hacking can be identified.

The server may generate a first encrypted character string by encrypting the part corresponding to a particular interval A1 in the first request message through a unidirectional encryption algorithm and generate a second request message by inserting all or some of the first encrypted character string into a particular interval B1 in the first request message. The second request message may be designated as a request message to be transmitted.

The unidirectional encryption algorithm may be an algorithm using a hash function. The unidirectional encryption algorithm may be one of Message-Digest algorithm 5 (MD5), Secure Hash Algorithm (SHA), bcrypt, Password-Based Key Derivation Function2 (PBKDF2), and scrypt.

The server may insert only L (L being a natural number) characters in the first encrypted character string may be inserted into the interval B1.

The server may generate an encrypted request message by encrypting the request message in S402.

The server may generate the encrypted request message by performing a bitwise operation on the part of the request message M1 times (M1 being a natural number larger than or equal to N1) according to a first sequence.

When the server uses N1 (N1 being a natural number) symmetric keys, the server may generate an encrypted request message by performing a bitwise operation on the request message with the symmetric keys M1 times. For example, the server may generate the encrypted request message by performing an XOR operation on the request message and the symmetric keys. Alternatively, the server may generate the encrypted request message by performing two or more different bitwise operations, for example, bit movement and bit transposition on the request message.

The bit movement corresponds to shift of each bit of the predefined number of bits in one direction, and the predefined number may be a kind of symmetric key. Further, the bit transposition corresponds to relocation of each bit in a predefined depth or a predefined order, and the predefined order may be a kind of symmetric key. Hereinafter, the expression that the bitwise operation is performed on the request message through the symmetric keys may be understood as the expression applied to the bit movement and the bit transposition.

The request message includes a start character (STX) in the very front and an end character (ETX) in the very back, and the server may generate the encrypted request message by performing the bitwise operation on the remaining parts other than the start character (STX) and the end character (ETX).

The server may transmit the encrypted request message to the utility meter and the utility meter, for example, the meter communication unit may receive the encrypted request message from the server in S404.

The utility meter, for example, the meter controller, may generate a first reconstructed message by decrypting the encrypted request message in S406.

The meter controller may identify a length of the encrypted request message by recognizing the start character (STX) and the end character (ETX) of the encrypted request message. Further, the server may generate the encrypted request message by inserting a message length into a message length block of the request message, and the meter controller may identify the message length in the message length block of the first reconstructed message generated by decrypting the encrypted request message and compare the length of the encrypted request message identified through the start character (STX) and the end character (ETX) with the message length included in the message length block of the first reconstructed message, so as to determine whether there is an error in the encrypted request message.

Meanwhile, the meter controller may generate the first reconstructed message by inversely performing the bitwise operation on the part of the encrypted request message M1 times according to a first inverse sequence opposing the first sequence.

The meter controller may generate a second encrypted character string by encrypting the part corresponding to an interval A1 in the first reconstructed message through a unidirectional encryption algorithm.

The meter controller may determine whether the encrypted request message is normal in S408.

The meter controller may determine whether the encrypted request message is normal by comparing a character string to be compared corresponding to an interval B1 in the first reconstructed message with the entirety or part of the second encrypted character string.

When it is determined that the encrypted request message is normal (Yes of S408), the meter controller may generate a meter reading message by responding to a request from the server included in the first reconstructed message and generate an encrypted meter reading message by encrypting the meter reading message in S410. For example, the meter controller may generate a meter reading message on the basis of the meter data generated by the meter reading unit and generate an encrypted meter reading message by encrypting the meter reading message. Further, the meter controller may control the meter communication unit to transmit the encrypted meter reading message to the server.

When it is determined that the encrypted meter reading message is abnormal (No of S408), the meter controller may increase a pre-initialized count, for example, an abnormal count or a hacking count in S412.

When the count exceeds a predetermined value, the meter controller may perform a function of preventing abnormality, for example, providing an alarm to the server or outside in S414.

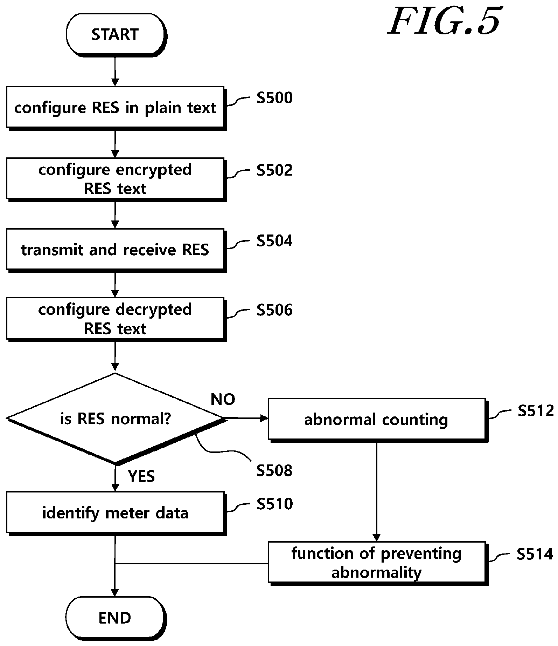

FIG. 5 is a flowchart illustrating a process of transmitting and receiving a meter reading message according to an embodiment.

Referring to FIG. 5, the utility meter may configure the meter reading message in plain text in S500.

The utility meter may generate a first meter reading message. The first meter reading message may include utility meter-specific information that specifies the utility meter. The utility meter-specific information may include, for example, household location information indicating a household location and ID information indicating an ID of a utility meter within each household.

The first meter reading message may further include response information corresponding to request information. The response information may include, for example, information type indication information indicating a type of responded information such as a flow rate, temperature, and a quantity of heat and utility type indication information indicating a type of the responded utility such as a water meter, a gas meter, a heat meter, and a hot water meter.

The first meter reading message may further include a data block. In the data block, meter data may be included or time information indicating a time point at which the first metering reading message is generated or the meter data is generated may be recorded. The meter data may include a flow rate value and a temperature value.

Information inserted into the first meter reading message may be inserted into a block in a particular location (interval). For example, the information type indication information may be inserted into a first message block of the first request message, the household location information may be inserted into a second message block, the utility type indication information may be inserted into a third message block, and the meter data may be inserted into a fourth message block (data block).

A random character string consisting of random numbers generated by arbitrary numbers may be further inserted into the first meter reading message. For example, the random character string may be inserted into a random character string block following the fourth message block.

The first meter reading message may further include a checksum value.

The first meter reading message may further include an encrypted character string by which falsification by hacking can be identified.

The utility meter may generate a first encrypted character string by encrypting the part corresponding to a particular interval A2 in the first meter reading message through a unidirectional encryption algorithm and generate a second meter reading message by inserting all or some of the first encrypted character string into a particular interval B2 in the first meter reading message. The second meter reading message may be designated as a meter reading message to be transmitted.

The unidirectional encryption algorithm may be an algorithm using a hash function. The unidirectional encryption algorithm may be one of Message-Digest algorithm 5 (MD5), Secure Hash Algorithm (SHA), bcrypt, Password-Based Key Derivation Function2 (PBKDF2), and scrypt.

The utility meter may insert only L (L being a natural number) characters in the first encrypted character string into the interval B2.

The utility meter may generate an encrypted meter reading message by encrypting the metering reading message in S502.

The utility meter may generate the encrypted meter reading message by performing a bitwise operation on the part of the meter reading message M2 times according to a second sequence.

When the utility meter uses N2 (N2 being a natural number) symmetric keys, the utility meter may generate the encrypted meter reading message by performing a bitwise operation on the meter reading message with the symmetric keys M2 times. For example, the utility meter may generate the encrypted meter reading message by performing an XOR operation on the meter reading message and the symmetric keys. Alternatively, the utility meter may generate the encrypted meter reading message by performing two or more different bitwise operations, for example, bit movement and bit transposition on the meter reading message.

The meter reading message includes a start character (STX) in the very front and an end character (ETX) in the very back, and the utility meter may generate the encrypted request message by performing the bitwise operation on the remaining parts other than the start character (STX) and the end character (ETX).

The utility meter may transmit the encrypted metering reading message to the server and the server, for example, the server communication unit may receive the encrypted metering reading message from the utility meter in S504.

The server, for example, the server controller may generate a second reconstructed message by decrypting the encrypted metering reading message in S506.

The server controller may identify a length of the encrypted meter reading message by recognizing the start character (STX) and the end character (ETX) of the encrypted meter reading message. Further, the utility meter may generate the encrypted meter reading message by inserting a message length into a message length block of the meter reading message, and the server controller may identify the message length in the message length block of the second reconstructed message generated by decrypting the encrypted meter reading message and compare the length of the encrypted meter reading message identified through the start character (STX) and the end character (ETX) with the message length included in the message length block of the second reconstructed message, so as to determine whether there is an error in the encrypted meter reading message.

Meanwhile, the server controller may generate the second reconstructed message by inversely performing the bitwise operation on the part of the encrypted meter reading message M2 times according to a second inverse sequence opposing the second sequence.

The server controller may generate a second encrypted character string by encrypting the part corresponding to an interval A2 in the second reconstructed message through a unidirectional encryption algorithm.

The server controller may determine whether the encrypted meter reading message is normal in S508.

The server controller may determine whether the encrypted meter reading message is normal by comparing the character string to be compared corresponding to an interval B2 of the second reconstructed message with the entirety or part of the second encrypted character string.

When it is determined that the encrypted meter reading message is normal (Yes of S508), the server controller may extract meter data from the second reconstructed message and control the server storage unit to store meter reading information included in the meter data in S510.

When it is determined that the encrypted meter reading message is abnormal (No of S508), the server controller may increase a pre-initialized count, for example, an abnormal count or a hacking count in S512.

When the count value exceeds a predetermined value, the server controller may perform a function of preventing abnormality, for example, providing an alarm to a user terminal corresponding to the utility meter in S514.

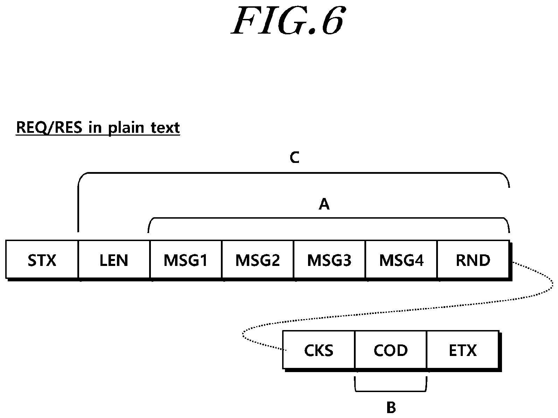

FIG. 6 illustrates a plain text protocol of the request message and the meter reading message according to an embodiment.

The request message and the meter reading message may have the same plain text protocol.

Referring to FIG. 6, the request message and the meter reading message may include a start character (STX), a message length block (LEN), a first message block (MSG1), a second message block (MSG2), a third message block (MSG3), a fourth message block (MSG4), a random character string block (RND), a checksum (CKS), an encrypted character string block (COD), and an end character (ETX).

The message length block (LEN) may include a message length. The message length may be a length from the first message block (MSG1) to the fourth message block (MSG4), a value generated by adding a length of the random character string block (RND) to the length, or a length of the blocks further including another block.

Information type indication information may be inserted into the first message block (MSG1), household location information may be inserted into the second message block (MSG2), and utility type indication information may be inserted into the third message block (MSG3).

The fourth message block (MSG4) is a data block and may include time information and meter data, and the length of the fourth message block (MSG4) may be fixed or variable in some embodiments.

An arbitrarily generated random number may be inserted into the random character string block (RND).

An encrypted character string generated by encrypting the part of the request message (REQ)/meter reading message (RES) corresponding to the interval A through a unidirectional encryption algorithm may be inserted into the encrypted character string block (COD) inserted into the interval B.

The interval A may include the random number character string block (RND) together with the first message block (MSG1) to the fourth message block (MSG4). The encrypted character string included in the encrypted character string block (COD) may be changed ever time by the random number character string block (RND) .

The checksum (CKS) may include a checksum value for an interval C, and the interval C may include the interval A in some embodiments. The server or the utility meter may determine whether message transmitted and received through communication have errors on the basis of the checksum (CKS).

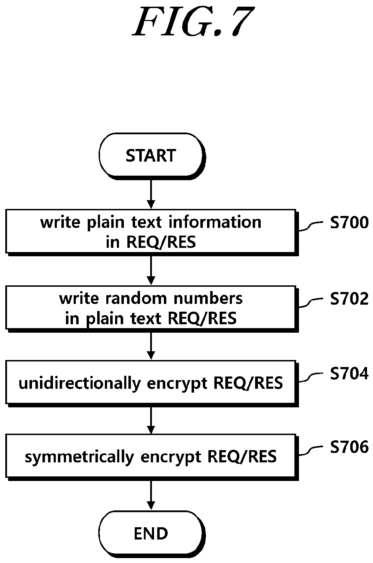

FIG. 7 is a flowchart illustrating an encryption process according to an embodiment.

Referring to FIG. 7, the server and the utility meter may write information in plain text in the request message or the meter reading message in S700. The server and the utility meter may write information on a household location, time information, and an amount of metering reading in plain text according to the ASCII table.

The server and the utility meter may add a random number character string written in plain text to the plain text in order to increase complexity of the request message and the meter reading message in S702.

Further, the server and the utility meter may generate an encrypted character string by executing a unidirectional encryption algorithm on the part including the random number character string and insert the encrypted character string into the request message and the meter reading message in S704.

The server and the utility meter may perform symmetric encryption on the request message and the meter reading message into which the encrypted character string is inserted through a bitwise operation using symmetric keys in S706.

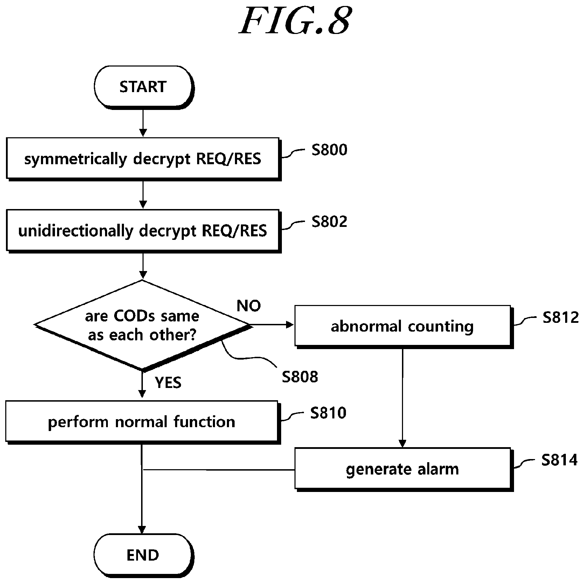

FIG. 8 is a flowchart illustrating a decryption process according to an embodiment.

Referring to FIG. 8, the server and the utility meter may generate a reconstructed message by inversely performing a bitwise operation using symmetric keys on the received encrypted message in S800. At this time, the server and the utility meter may generate the reconstructed message using symmetric keys while storing symmetric keys which are the same as the symmetric keys used for encryption.

The server and the utility meter may generate an encrypted character string by performing a unidirectional encryption algorithm on a particular interval of the reconstructed message in S802.

Further, the server and the utility meter may compare the character string to be compared, which is included in the reconstructed message, for example, a character string corresponding to the encrypted character string which the server and the utility meter insert into the request message and the meter reading message with a newly generated encrypted character string and identify whether the encrypted charter strings are the same as each other in S808.

When the character string to be compared and the encrypted character string are the same as each other (Yes of S808), the server and the utility meter may perform a normal function corresponding to the received message in S810.

When the character string to be compared and the encrypted character string are not the same as each other (No of S808), the server and the utility meter may increase a count indicating abnormality in S812 and, when the count exceeds a predetermined value, generate an alarm in S814.

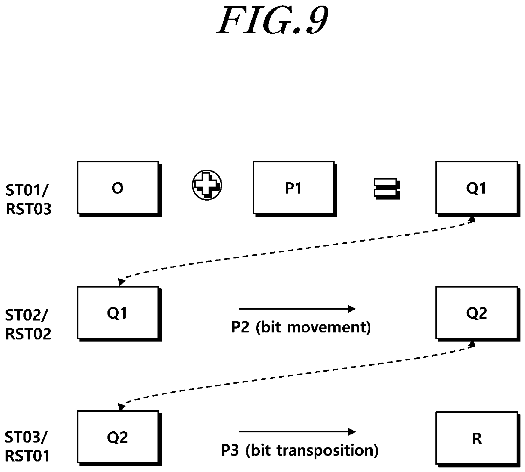

FIG. 9 illustrates symmetric encryption and decryption according to an embodiment.

The server and the utility meter may generate an encrypted message by performing a bitwise operation on N symmetric keys M times.

For example, the server and the utility meter may generate a first encrypted message (Q1) by performing a first bitwise operation, for example, an XOR operation on a plain text message (O) and a first symmetric key (P1) in a first step (ST01). The first symmetric key is reconfiguration of ASCII plain text in Hexa, and, for example, A!b1C2d3E4#$% may correspond to 41 21 62 31 43 32 64 33 45 34 23 24 25. The server and the utility meter may perform the XOR operation on the first symmetric key and the plain text message (O) in the unit of bytes in one-to-one correspondence.

Further, the server and the utility meter may generate a second encrypted message (Q2) by performing a second bitwise operation, for example, bit movement on the first encrypted message (Q1) and a second symmetric key (P2) in a second step (ST02). The second symmetric key correspond a direction of bit movement and the number of moving bits. For example, when the second symmetric key indicates movement of 10 bits in a right direction, 61 36 63 01 53 30 54 23 54 26 30 30 30 may become 6B 40 6D 0B 5D 3A 5E 2D 5E 30 3A 3A 3A by applying the second symmetric key.

Further, the server and the utility meter may generate an encrypted message (R) by performing a third bitwise operation, for example, bit transposition on the second encrypted message (Q2) and a third symmetric key (P3) in a third step (ST03). The third symmetric key designates a location of each relocated bit. For example, when the third symmetric key for a message consisting 5 bits of ABCDE corresponds to 14352, the message becomes ADCEB after the bitwise operation is applied thereto.

Decryption may be performed on the same symmetric keys in an inverse sequence.

For example, the server and the utility meter may generate the second encrypted message (Q2) by inversely performing a third bitwise operation on the encrypted message (R) with the third symmetric key (P3) in a first inverse step (RST01).

Further, the server and the utility meter may generate the first encrypted message (Q1) by inversely performing the second bitwise operation on the second encrypted message (Q2) with the second symmetric key (P2) in a second inverse step (RST02).

In addition, the server and the utility meter may reconstruct a plain text message (O) by inversely performing the first bitwise operation on the first encrypted message (Q1) with the first symmetric key (P1) in a third inverse step (RST03).

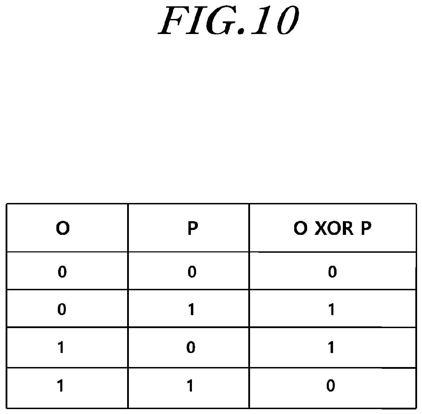

FIG. 10 illustrates a logical table of an XOR operation.

Referring to FIG. 10, when the plain text message (O) is 1 and the symmetric key (P) is 0, a bitwise operation value by XOR becomes 1 and an encrypted message may be generated by the bitwise operation value. Further, inversely, when the encrypted message is 1 and the symmetric key (P) is 0, it may be identified that the plain text message (O) corresponding to the original text is 1.

The server and the utility meter may generate the encrypted message according to the logical table while storing in advance the logical table for each bitwise operation.

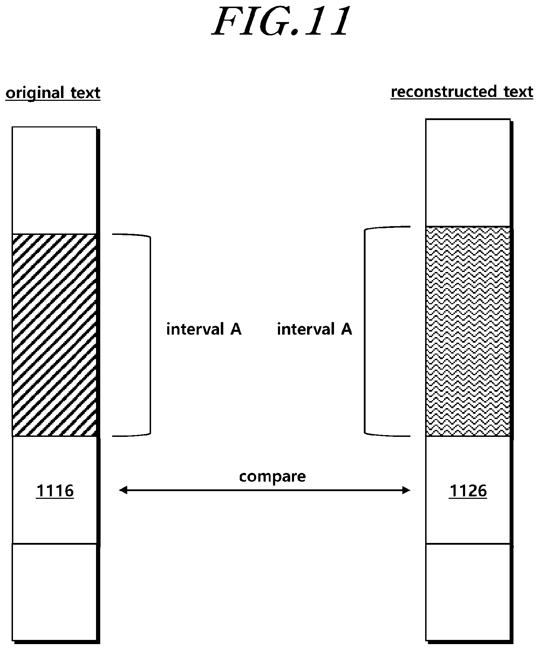

FIG. 11 illustrates a process of comparing encrypted character strings according to an embodiment.

Referring to FIG. 11, the side transmitting a communication message, for example, the request message or the meter reading message may generate, insert, and transmit a first encrypted character string 1116 through a unidirectional algorithm based on the part corresponding to the interval A of the communication message (original text) to be transmitted.

Further, the side receiving the communication message may generate a reconstructed message (reconstructed text) by reconstructing the received communication message and generate a second encrypted character string 1126 through a unidirectional encryption algorithm, which is the same as that used by the transmitting side, based on the part corresponding to the interval A of the reconstructed message (reconstructed text).

The server and the utility meter may determine whether the received communication message is normal, for example, whether the received communication message is hacked or has errors on the basis of the principle that the first encrypted character string 1116 and the second encrypted character string 1126 are the same as each other if the interval A of the communication message (original text) and the interval A of the reconstructed message (reconstructed text) are the same as each other and the algorithms used for generating the encrypted character strings are the same as each other.

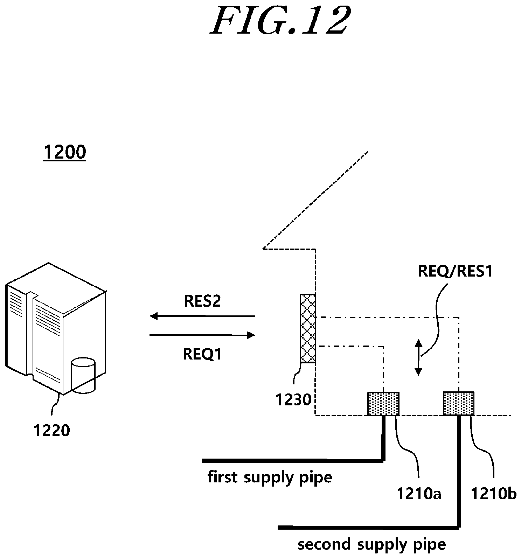

FIG. 12 is a diagram illustrating a meter reading system according to another embodiment.

Referring to FIG. 12, a meter reading system 1200 may include one or more utility meters 1210a and 1210b, a server 1220, and an external display system 1230.

The meter reading system 1200 may include a plurality of utility meters 1210a and 1210b and, at this time, the utility meter 1210a and 1210b may be connected to different supply pipes and measure amounts of the use of the utilities supplied through the respective pipes.

The plurality of utility meters 1210a and 1210b may be connected to the external display system 1230 through communication. Further, the external display system 1230 may display meter reading information read by each utility meter 1210a and 1210b.

The external display system 1230 may be connected to the server 1220 through communication may transmit the meter reading information received from the plurality of utility meters 1210a and 1210b to the server 1220.

The external display system 1230 may receive an encrypted request message (REQ) from the server 1220 and retransmit the encrypted request message to the plurality of utility meters 1210a and 1210b. Alternatively, the external display system 1230 may receive the encrypted request message (REQ) from the server 1220 and determine whether the message (REQ) is normal. When it is determined that the message (REQ) is normal, the external display system 1230 may transmit the message (REQ) to the utility meters 1210a and 1210b.

The external display system 1230 may receive an encrypted meter reading message (RES1) from the utility meters 1210a and 1210b and retransmit the encrypted meter reading message to the server 1220. Alternatively, the external display system 1230 may receive the encrypted meter reading message (RES1) from the utility meters 1210a and 1210b and determine whether the message (RES1) is normal. When it is determined that the message (RES1) is normal, the external display system 1230 may retransmit the message (RES1) to the server 1220 or transmit an encrypted meter reading message (RES2), to which some information is added, to the server 1220.

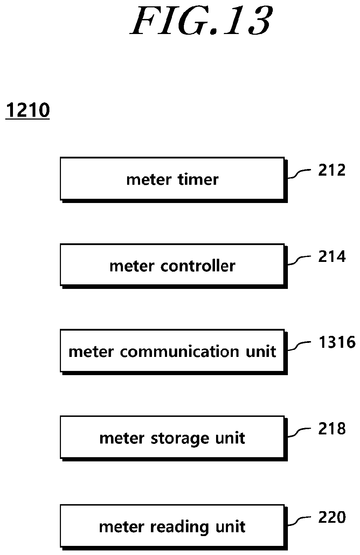

FIG. 13 is a block diagram illustrating the utility meter according to another embodiment.

Referring to FIG. 13, the utility terminal 1210 may include the meter timer 212, the meter controller 214, a meter communication unit 1316, the meter storage unit 218, and the meter reading unit 220.

Unlike the meter communication unit 216 illustrated in FIG. 2, the meter communication unit 1316 may be connected to the external display system without being connected to the server.

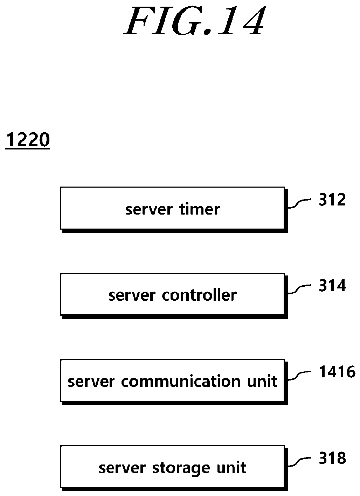

FIG. 14 is a block diagram illustrating the server according to another embodiment.

Referring to FIG. 14, the server 1220 may include the server timer 312, the server controller 314, a server communication unit 1416, and the server storage unit 318.

Unlike the server communication unit 316 illustrated in FIG. 3, the server communication unit 1416 may be connected to the external display system without being connected to the utility meter.

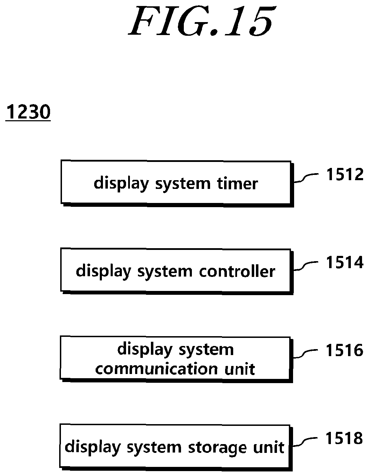

FIG. 15 is a block diagram illustrating the external display system according to another embodiment.

Referring to FIG. 15, the external display system 1230 may include a display system timer 1512, a display system controller 1514, a display system communication unit 1516, and a display system storage unit 1518.

The display system timer 1512 may be called a timer, the display system controller 1514 may be called a controller, the display system communication unit 1516 may be called a communication unit, and the display system storage unit 1518 may be called a storage unit but, the modifier "display system" is added before a name of each element in order to prevent confusion with another device.

The display system timer 1512 is an element for generating time and may synchronize the timers of the server and the utility meter with time.

The display system controller 1514 may perform all controls of the external display system 1230. In the following description, it is understood that unless an element performing an operation is specified, the operation is performed by the display system controller 1514.

The display system communication unit 1516 may receive the encrypted message from the server and the utility meter and transmit the encrypted message to the server and the utility meter.

The display system storage unit 1518 may store a key (KEY) required for encryption and setting matters. In the following description, the expression of presetting a particular element may be understood that such settings are stored in the display system storage unit 1518.

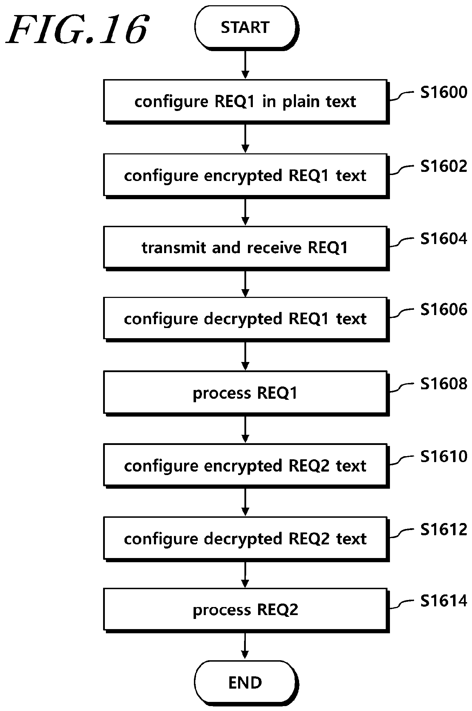

FIG. 16 is a flowchart illustrating a process of transmitting the request message according to another embodiment.

Referring to FIG. 16, the server may configure the request message in plain text. The request message configured in plain text may be the same as the request message described through an embodiment in S1600. For example, the server may insert an encrypted character string generated through the unidirectional encryption algorithm into the request message, and the request message may include a random number character string block.

The server may generate a first encrypted request message after encrypting the request message through a bitwise operation using symmetric keys in S1602. The first encrypted request message may be the same as the encrypted request message described through an embodiment.

The server may transmit a first encrypted request message to the external display system and the external display system may receive the first encrypted request message in S1604.

The external display system may generate a first reconstructed message by decrypting the first encrypted request message in S1606. A process of generating the first reconstructed message from the first encrypted request message may be the same as the process in which the utility meter generates the reconstructed message from the encrypted request message according to an embodiment.

The external display system may identify whether the first encrypted request message is normal by analyzing the encrypted character string in the first reconstructed message. When the first encrypted request message is abnormal, the external display system may ignore the first encrypted request message and increase an abnormal count. When the abnormal count exceeds a predetermined value, the external display system may display alarm information.

When the first encrypted request message is normal, the external display system may generate a second encrypted request message by encrypting the first reconstructed message or by copying the first encrypted request message without any change in S1610. When the second encrypted request message is generated by encrypting the first reconstructed message, the external display system may insert a new random number into the random number character string block to make the first encrypted request message and the second encrypted request message different from each other.

The utility meter may receive the second encrypted request message and configure a second reconstructed message by decrypting the second encrypted request message in S1612. At this time, a process of decrypting the second encrypted request message may be the same as the process in which the utility meter decrypts the encrypted request message according to an embodiment.

When it is determined that the second encrypted request message is normal through verification of the second encrypted request message, the utility meter may perform a meter reading function required from the server in S1614.

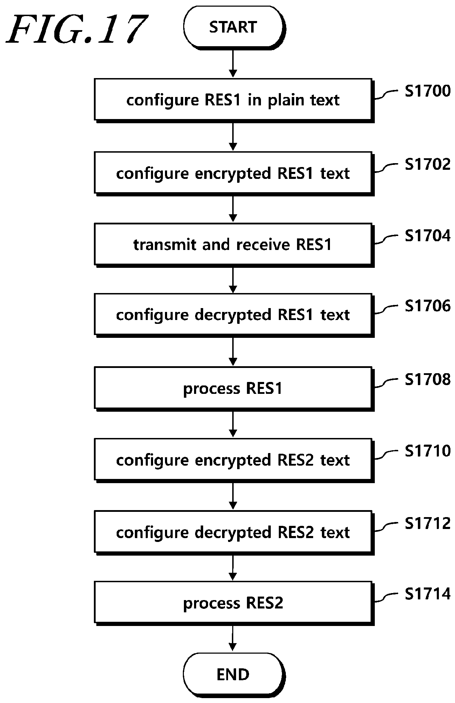

FIG. 17 is a flowchart illustrating the process of transmitting the meter reading message according to another embodiment.

Referring to FIG. 17, the utility meter may configure a first meter reading message in plain text in S1700. The first meter reading message configured in plain text may be the same as the meter reading message described through an embodiment.

The utility meter may generate a first encrypted meter reading message after encrypting the first meter reading message through a bitwise operation using symmetric keys in S1702. The first encrypted meter reading message may the same as the encrypted meter reading message described through an embodiment.

The external display system, for example, the display system communication unit, may receive the first encrypted meter reading message from the utility meter in S1704.

Further, the display system controller may generate a first reconstructed message by decrypting the first encrypted meter reading message in S1706.

The display system controller may generate the first reconstructed message by performing a bitwise operation on the part of the first encrypted meter reading message M1 (M1 being a natural number) according to a first inverse sequence opposing the first sequence.

The display system controller may generate a first encrypted charter string by encrypting the part corresponding to an interval 1-1 in the first reconstructed message through the unidirectional encryption algorithm and determine whether the first encrypted meter reading message is normal by comparing a character string to be compared corresponding to an interval 2-1 in the first reconstructed message with all or some of the first encrypted character string.

When the first encrypted meter reading message is normal, the display system controller may generate a second reconstructed message by inserting a household location character string indicating a household location into a particular interval in the first reconstructed message in S1708.

The display system controller may generate a second encrypted meter reading message by encrypting the second reconstructed message through a mechanism which is the same as that used by the utility meter in S1710. Specifically, the display system controller may generate a second encrypted character string by encrypting the part corresponding to an interval 1-2 in the second reconstructed message, generate a third reconstructed message by inserting all or some of the second encrypted character string into an interval 2-2 in the second reconstructed message, and generate a second encrypted meter reading message by performing a bitwise operation on the part of the third reconstructed message M2 (M2 being a natural number) according to a second sequence.

The display system controller may transmit the second encrypted meter reading message to the server.

The server may decrypt the second encrypted meter reading message in S1712 and store meter data included in the decrypted message in S1714.

Meanwhile, the external display system may further include a display unit for displaying meter reading information, and the display unit may display alarm information when it is determined that the received encrypted message, for example, the encrypted request message or the encrypted meter reading message is abnormal.

The communication unit of the external display system may communicate with a plurality of utility meters and, at this time, the plurality of utility meters may be distinguished by separate IDs, for example, different IDs.

In accordance with an aspect of the present disclosure, an external display system is provided, which includes: a communication unit configured to receive a first encrypted message from a utility meter; and a controller configured to generate a first reconstructed message by performing a bitwise operation on a part of the first encrypted message M1 (M1 being a natural number) times according to a first inverse sequence opposing to a first sequence, generate a first encrypted character string by encrypting a part corresponding to an interval 1-1 in the first reconstructed message through a unidirectional encryption algorithm, compare a character string to be compared corresponding to an interval 2-1 in the first reconstructed message with all or some of the first encrypted character string, generate a second reconstructed message by inserting a household location character string indicating a household location into a particular interval of the first reconstructed message when it is determined that the first encrypted message is normal, and control the communication unit to transmit a second encrypted message generated by encrypting the second reconstructed message to a server.

The external display system may further include a display unit configured to display meter reading information of the utility meter.

The display unit may display alarm information when it is determined that the first encrypted message is abnormal.

The controller may generate a second encrypted character string by encrypting a part corresponding to an interval 1-2 in the second reconstructed message through the unidirectional encryption algorithm, generate a third reconstructed message by inserting all or some of the second encrypted character string into an interval 2-2 in the second reconstructed message, and generate the second encrypted message by performing a bitwise operation on a part of the third reconstructed message M2 (M2 being a natural number larger than or equal to N2) according to a second sequence.

The communication unit may communicate with a plurality of utility meters, and the plurality of utility meters is distinguished by separate IDs.

The controller may insert a random number character string block configured by random numbers into a part of the interval 1-2 in the second reconstructed message.

In addition, since terms, such as "including," "comprising," and "having" mean that one or more corresponding components may exist unless they are specifically described to the contrary, it shall be construed that one or more other components can be included. All the terms that are technical, scientific or otherwise agree with the meanings as understood by a person skilled in the art unless defined to the contrary. Common terms as found in dictionaries should be interpreted in the context of the related technical writings not too ideally or impractically unless the present disclosure expressly defines them so.

Although a preferred embodiment of the present disclosure has been described for illustrative purposes, those skilled in the art will appreciate that various modifications, additions and substitutions are possible, without departing from the scope of the disclosure as disclosed in the accompanying claims. Therefore, the embodiments disclosed in the present disclosure are intended to illustrate the scope of the technical idea of the present disclosure, and the scope of the present disclosure is not limited by the embodiment. The scope of the present disclosure shall be construed on the basis of the accompanying claims in such a manner that all of the technical ideas included within the scope equivalent to the claims belong to the present disclosure.

## Claims

1. A utility meter reading system (100) comprising a utility meter (110, 1210, 1210a, 1210b) and a server (120, 1220),
said server (120, 1220) being configured to generate a first request message (REQ), generate a first encrypted character string (1116) by encrypting a part corresponding to a first interval (A) in the first request message through a unidirectional encryption algorithm, generate a second request message by inserting all or some of the first encrypted character string into a second interval (B2) in the first request message, and generate an encrypted request message by performing a bitwise operation on a part of the second request message M1, M1 being a natural number, times according to a first sequence;
said utility meter comprising:
a communication unit (216, 1316, 1416, 1516) configured to receive the encrypted request message from said server (120, 1220);
a meter reading unit (220) configured to generate meter data; and
a controller (214, 314) configured to generate a reconstructed message by inversely performing the bitwise operation on the part of the encrypted request message M1 times according to a first inverse sequence opposing the first sequence, generate a second encrypted character string by encrypting a part corresponding to the first interval in the reconstructed message through the unidirectional encryption algorithm, determine that the encrypted request message is normal by comparing a character string to be compared corresponding to the second interval in the reconstructed message with all or some of the second encrypted character string, generate an encrypted meter reading message by encrypting meter data when it is determined that the encrypted request message is normal, and control the communication unit to transmit the encrypted meter reading message to the server, and
wherein the reconstructed message includes a message length block (LEN), the second request message includes a start character (STX) and an end character (ETX), and said controller (214, 314) is configured to determine whether the encrypted request message has errors by comparing a length of the encrypted request message identified through the start character and the end character with a message length included in the message length block,
wherein the normal means that the second encrypted character string and the character string are the same.

2. The utility meter reading system of claim 1, wherein the first request message includes a first message block (MSG1) indicating a type of requested information and a second message block (MSG2) indicating a location of a household in which the utility meter is installed, and the second message block are included in the first interval.

3. The utility meter reading system of claim 1 or 2, wherein the first request message includes a third message block (MSG3) indicating a type of the utility meter and a fourth message block (MSG4) including time information, and the third message block and the fourth message block are included in the first interval.

4. The utility meter reading system of any of claims 1 to 3, wherein the first request message further includes a checksum value (CKS) for a third interval (C) including the first interval (A), and the controller determines whether the encrypted request message has errors through the checksum value included in the third interval of the reconstructed message.

5. The utility meter reading system of any of claims 1 to 4, wherein, when it is determined that the encrypted request message is abnormal, the controller increases a pre-initialized count and, when the count exceeds a predetermined value, provides an alarm to the server or outside.

6. The utility meter reading system of any of claims 1 to 5, wherein the unidirectional encryption algorithm is an algorithm using a hash function.

7. The utility meter reading system of any of claims 1 to 6, wherein the unidirectional encryption algorithm is one of Message-Digest algorithm 5 (MD5), Search Hash Algorithm (SHA), bcrypt, Password-Based Key Derivation Function2 (PBKDF2), and scrypt.

8. The utility meter reading system of any of claims 1 to 7, wherein the server generates the encrypted request message by performing an XOR operation on the second request message and N1 (N1 being a natural number) symmetric keys.

9. The utility meter reading system of any of claims 1 to 8, wherein the server generates the encrypted request message by performing two or more different types of bitwise operations.

10. The utility meter reading system of claim 1, wherein the bitwise operation includes bit movement of shifting each of a predetermined number of bits in one direction and bit transposition of relocating a location of each bit in a predefined order.

11. The utility meter reading system of claim 9 or 10, wherein the bitwise operation includes at least two bitwise operations among an XOR operation, bit movement of shifting each of a predetermined number of bits in one direction and bit transposition of relocating a location of each bit in a predefined order.

12. The utility meter reading system of any of claims 1 to 11, wherein the server inserts only L (L being a natural number) characters in the first encrypted character string into the second interval.

13. The utility meter reading system of any of claims 1 to 12, wherein the server generates the encrypted request message by performing the bitwise operation on remaining parts of the second request message other than the start character and the end character.

14. A method of communicating meter data, the method comprising:
writing a first request message including utility meter-specific information specifying a utility meter (110, 1210, 1210a, 1210b) by a server (120, 1220);
generating a first encrypted character string (S402) by encrypting a part corresponding to a first interval in the first request message through a unidirectional encryption algorithm by the server;
generating a second request message by inserting all or some of the encrypted first character string into a second interval in the first request message by the server;
generating an encrypted request message by performing a bitwise operation on a part of the second request message M1, M1 being a natural number, times according to a first sequence by the server;
receiving the encrypted request message by the utility meter;
generating a first reconstructed message by inversely performing the bitwise operation on the encrypted request message M1 times according to a first inverse sequence opposing the first sequence by the utility meter;
generating a second encrypted character string by encrypting the part corresponding to the first interval in the first reconstructed message through the unidirectional encryption algorithm by the utility meter;
determining (S408, S508) whether the encrypted request message is normal by comparing a first character string to be compared corresponding to the second interval in the first reconstructed message with all or some of the second encrypted character string by the utility meter; and
performing a function requested by the first reconstructed message by the utility meter when the encrypted request message is normal, and
wherein the first reconstructed message includes a message length block (LEN), the second request message includes a start character (STX) and an end character (ETX), and the utility meter determines whether the encrypted request message has errors by comparing a length of the encrypted request message identified through the start character and the end character with a message length included in the message length block,
wherein the normal means that the second encrypted character string and the first character string are the same.

15. The method of claim 14, further comprising:
generating a first meter reading message by inserting a result of the function requested by the first reconstructed message into the meter data by the utility meter;
generating a third encrypted character string by encrypting a part corresponding to a third interval in the first meter reading message through the unidirectional encryption algorithm by the utility meter;
generating a second meter reading message by inserting all or some of the third encrypted character string into a fourth interval in the first meter reading message by the utility meter;
generating an encrypted meter reading message by performing the bitwise operation on a part of the second meter reading message M2 (M2 being a natural number) times according to a second sequence by the utility meter; and
transmitting the encrypted meter reading message to the server by the utility meter.

## Patentansprüche

1. Verbrauchszählerablesesystem (100), das einen Verbrauchszähler (110, 1210, 1210a, 1210b) und einen Server (120, 1220) umfasst,
wobei der Server (120, 1220) dazu konfiguriert ist, eine erste Anforderungsnachricht (REQ) zu generieren, eine erste verschlüsselte Zeichenfolge (1116) zu generieren, indem ein Teil, der einem ersten Intervall (A) in der ersten Anforderungsnachricht entspricht, durch einen unidirektionalen Verschlüsselungsalgorithmus verschlüsselt wird, eine zweite Anforderungsnachricht zu generieren, indem die gesamte oder ein Teil der ersten verschlüsselten Zeichenfolge in ein zweites Intervall (B2) in der ersten Anforderungsnachricht eingefügt wird, und eine verschlüsselte Anforderungsnachricht zu generieren, indem eine bitweise Operation an einem Teil der zweiten Anforderungsnachricht M1 Mal, wobei M1 eine natürliche Zahl ist, entsprechend einer ersten Sequenz durchgeführt wird;
wobei der Verbrauchszähler Folgendes umfasst:
eine Kommunikationseinheit (216, 1316, 1416, 1516), die dazu konfiguriert ist, die verschlüsselte Anforderungsnachricht vom Server (120, 1220) zu empfangen;
eine Zählerableseeinheit (220), die dazu konfiguriert ist, Zählerdaten zu generieren; und
eine Steuerung (214, 314), die dazu konfiguriert ist, eine rekonstruierte Nachricht zu generieren, indem die bitweise Operation an dem Teil der verschlüsselten Anforderungsnachricht M1 Mal entsprechend einer ersten inversen Sequenz, die der ersten Sequenz entgegengesetzt ist, invers durchgeführt wird, eine zweite verschlüsselte Zeichenfolge zu generieren, indem ein Teil, der dem ersten Intervall in der rekonstruierten Nachricht entspricht, durch den unidirektionalen Verschlüsselungsalgorithmus verschlüsselt wird, zu bestimmen, dass die verschlüsselte Anforderungsnachricht normal ist, indem eine zu vergleichende Zeichenfolge, die dem zweiten Intervall in der rekonstruierten Nachricht entspricht, mit der gesamten oder einem Teil der zweiten verschlüsselten Zeichenfolge verglichen wird, eine verschlüsselte Zählerablesungsnachricht zu generieren, indem Zählerdaten verschlüsselt werden, wenn bestimmt wird, dass die verschlüsselte Anforderungsnachricht normal ist, und die Kommunikationseinheit zu steuern, um die verschlüsselte Zählerablesungsnachricht an den Server zu übertragen, und
wobei die rekonstruierte Nachricht einen Nachrichtenlängenblock (LEN) enthält, die zweite Anforderungsnachricht ein Startzeichen (STX) und ein Endzeichen (ETX) enthält, und die Steuerung (214, 314) dazu konfiguriert ist, zu bestimmen, ob die verschlüsselte Anforderungsnachricht Fehler aufweist, indem eine Länge der verschlüsselten Anforderungsnachricht, die durch das Startzeichen und das Endzeichen identifiziert wird, mit einer Nachrichtenlänge, die im Nachrichtenlängenblock enthalten ist, verglichen wird,
wobei normal bedeutet, dass die zweite verschlüsselte Zeichenfolge und die Zeichenfolge gleich sind.

2. Verbrauchszählerablesesystem nach Anspruch 1, wobei die erste Anforderungsnachricht einen ersten Nachrichtenblock (MSG1), der eine Art der angeforderten Informationen angibt, und einen zweiten Nachrichtenblock (MSG2) enthält, der einen Standort eines Haushalts angibt, in dem der Verbrauchszähler installiert, und der zweite Nachrichtenblock im ersten Intervall enthalten ist.

3. Verbrauchszählerablesesystem nach Anspruch 1 oder 2, wobei die erste Anforderungsnachricht einen dritten Nachrichtenblock (MSG3), der eine Art des Verbrauchszählers angibt, und einen vierten Nachrichtenblock (MSG4) enthält, der Zeitinformationen enthält, und der dritte Nachrichtenblock und der vierte Nachrichtenblock im ersten Intervall enthalten sind.

4. Verbrauchszählerablesesystem nach einem der Ansprüche 1 bis 3, wobei die erste Anforderungsnachricht ferner einen Prüfsummenwert (CKS) für ein drittes Intervall (C) einschließlich des ersten Intervalls (A) enthält, und die Steuerung durch den Prüfsummenwert, der in dem dritten Intervall der rekonstruierten Nachricht enthalten ist, bestimmt, ob die verschlüsselte Anforderungsnachricht Fehler aufweist.

5. Verbrauchszählerablesesystem nach einem der Ansprüche 1 bis 4, wobei, wenn bestimmt wird, dass die verschlüsselte Anforderungsnachricht abnormal ist, die Steuerung eine vorab initialisierte Zählung erhöht und, wenn die Zählung einen vorbestimmten Wert überschreitet, dem Server oder dem Außerbereich einen Alarm bereitstellt.

6. Verbrauchszählerablesesystem nach einem der Ansprüche 1 bis 5, wobei der unidirektionale Verschlüsselungsalgorithmus ein Algorithmus ist, der eine Hash-Funktion verwendet.

7. Verbrauchszählerablesesystem nach einem der Ansprüche 1 bis 6, wobei der unidirektionale Verschlüsselungsalgorithmus einer von Message-Digest Algorithm 5 (MD5), Search Hash Algorithm (SHA), bcrypt, Password-Based Key Derivation Function 2 (PBKDF2) und scrypt ist.

8. Verbrauchszählerablesesystem nach einem der Ansprüche 1 bis 7, wobei der Server die verschlüsselte Anforderungsnachricht generiert, indem er eine XOR-Operation an der zweiten Anforderungsnachricht und N1 (wobei N1 eine natürliche Zahl ist) symmetrischen Schlüsseln durchführt.

9. Verbrauchszählerablesesystem nach einem der Ansprüche 1 bis 8, wobei der Server die verschlüsselte Anforderungsnachricht generiert, indem er zwei oder mehr verschiedene Arten von bitweisen Operationen durchführt.

10. Verbrauchszählerablesesystem nach Anspruch 1, wobei die bitweise Operation eine Bitbewegung, bei der jedes einer vorbestimmten Anzahl von Bits in eine Richtung verschoben wird, und eine Bittransposition, bei der eine Position jedes Bits in einer vordefinierten Reihenfolge verlagert wird, enthält.

11. Verbrauchszählerablesesystem nach Anspruch 9 oder 10, wobei die bitweise Operation mindestens zwei bitweise Operationen enthält, darunter eine XOR-Operation, eine Bitbewegung, bei der jedes einer vorbestimmten Anzahl von Bits in eine Richtung verschoben wird, und eine Bittransposition, bei der eine Position jedes Bits in einer vordefinierten Reihenfolge verlagert wird.

12. Verbrauchszählerablesesystem nach einem der Ansprüche 1 bis 11, wobei der Server nur L (wobei L eine natürliche Zahl ist) Zeichen in der ersten verschlüsselten Zeichenfolge in das zweite Intervall einfügt.

13. Verbrauchszählerablesesystem nach einem der Ansprüche 1 bis 12, wobei der Server die verschlüsselte Anforderungsnachricht generiert, indem die bitweise Operation an verbleibenden Teilen der zweiten Anforderungsnachricht außer dem Startzeichen und dem Endzeichen durchgeführt wird.

14. Verfahren zum Übermitteln von Zählerdaten, wobei das Verfahren Folgendes umfasst:
Schreiben einer ersten Anforderungsnachricht, die verbrauchszählerspezifische Informationen enthält, die einen Verbrauchszähler (110, 1210, 1210a, 1210b) spezifizieren, durch einen Server (120, 1220);
Generieren einer ersten verschlüsselten Zeichenfolge (S402), indem ein Teil, der einem ersten Intervall in der ersten Anforderungsnachricht entspricht, durch einen unidirektionalen Verschlüsselungsalgorithmus verschlüsselt wird, durch den Server;
Generieren einer zweiten Anforderungsnachricht, indem die gesamte oder ein Teil der verschlüsselten ersten Zeichenfolge in ein zweites Intervall in der ersten Anforderungsnachricht eingefügt wird, durch den Server;
Generieren einer verschlüsselten Anforderungsnachricht, indem eine bitweise Operation an einem Teil der zweiten Anforderungsnachricht M1 Mal, wobei M1 eine natürliche Zahl ist, entsprechend einer ersten Sequenz durchgeführt wird, durch den Server;
Empfangen der verschlüsselten Anforderungsnachricht durch den Verbrauchszähler;
Generieren einer ersten rekonstruierten Nachricht, indem die bitweise Operation an der verschlüsselten Anforderungsnachricht M1 Mal entsprechend einer ersten inversen Sequenz, die der ersten Sequenz entgegengesetzt ist, invers durchgeführt wird, durch den Verbrauchszähler;
Generieren einer zweiten verschlüsselten Zeichenfolge, indem der Teil, der dem ersten Intervall in der ersten rekonstruierten Nachricht entspricht, durch den unidirektionalen Verschlüsselungsalgorithmus verschlüsselt wird, durch den Verbrauchszähler;
Bestimmen (S408, S508), ob die verschlüsselte Anforderungsnachricht normal ist, indem eine erste zu vergleichende Zeichenfolge, die dem zweiten Intervall in der ersten rekonstruierten Nachricht entspricht, mit der gesamten oder einem Teil der zweiten verschlüsselten Zeichenfolge verglichen wird, durch den Verbrauchszähler; und
Durchführen einer durch die erste rekonstruierte Nachricht angeforderten Funktion durch den Verbrauchszähler, wenn die verschlüsselte Anforderungsnachricht normal ist, und
wobei die erste rekonstruierte Nachricht einen Nachrichtenlängenblock (LEN) enthält, die zweite Anforderungsnachricht ein Startzeichen (STX) und ein Endzeichen (ETX) enthält und der Verbrauchszähler bestimmt, ob die verschlüsselte Anforderungsnachricht Fehler aufweist, indem eine Länge der verschlüsselten Anforderungsnachricht, die durch das Startzeichen und das Endzeichen identifiziert wird, mit einer Nachrichtenlänge, die im Nachrichtenlängenblock enthalten ist, verglichen wird,
wobei normal bedeutet, dass die zweite verschlüsselte Zeichenfolge und die erste Zeichenfolge gleich sind.

15. Verfahren nach Anspruch 14, das ferner Folgendes umfasst:
Generieren einer ersten Zählerablesungsnachricht, indem ein Ergebnis der von der ersten rekonstruierten Nachricht angeforderten Funktion in die Zählerdaten eingefügt wird, durch den Verbrauchszähler;
Generieren einer dritten verschlüsselten Zeichenfolge, indem ein Teil, der einem dritten Intervall in der ersten Zählerablesungsnachricht entspricht, durch den unidirektionalen Verschlüsselungsalgorithmus verschlüsselt wird, durch den Verbrauchszähler;
Generieren einer zweiten Zählerablesungsnachricht, indem die gesamte oder ein Teil der dritten verschlüsselten Zeichenfolge in ein viertes Intervall in der ersten Zählerablesungsnachricht eingefügt wird, durch den Verbrauchszähler;
Generieren einer verschlüsselten Zählerablesungsnachricht, indem die bitweise Operation an einem Teil der zweiten Zählerablesungsnachricht M2 Mal (wobei M2 eine natürliche Zahl ist) entsprechend einer zweiten Sequenz durchgeführt wird, durch den Verbrauchszähler; und
Übertragen der verschlüsselten Zählerablesungsnachricht an den Server durch den Verbrauchszähler.

## Revendications

1. Système de relevé de compteur de consommation (100) comprenant un compteur de consommation (110, 1210, 1210a, 1210b) et un serveur (120, 1220),
ledit serveur (120, 1220) étant configuré pour générer un premier message de demande (REQ), générer une première chaîne de caractères chiffrée (1116) par le chiffrement d'une partie correspondant à un premier intervalle (A) dans le premier message de demande par l'intermédiaire d'un algorithme de chiffrement unidirectionnel, générer un deuxième message de demande par l'insertion de l'intégralité ou d'une partie de la première chaîne de caractères chiffrée dans un deuxième intervalle (B2) dans le premier message de demande, et générer un message de demande chiffré par la réalisation d'une opération bit à bit sur une partie du deuxième message de demande M1, M1 étant un nombre naturel, fois selon une première séquence ;
ledit compteur de consommation comprenant :
une unité de communication (216, 1316, 1416, 1516) configurée pour recevoir le message de demande chiffré depuis ledit serveur (120, 1220) ;
une unité de relevé de compteur (220) configurée pour générer des données de compteur ; et
un contrôleur (214, 314) configuré pour générer un message reconstruit par la réalisation inversement de l'opération bit à bit sur la partie du message de demande chiffré M1 fois selon une première séquence inverse opposée à la première séquence, générer une deuxième chaîne de caractères chiffrée par le chiffrement d'une partie correspondant au premier intervalle dans le message reconstruit par l'intermédiaire de l'algorithme de chiffrement unidirectionnel, déterminer que le message de demande chiffré est normal par la comparaison d'une chaîne de caractères à comparer correspondant au deuxième intervalle dans le message reconstruit à l'intégralité ou à une partie de la deuxième chaîne de caractères chiffrée, générer un message de relevé de compteur chiffré par le chiffrement de données de compteur lorsqu'il est déterminé que le message de demande chiffré est normal, et commander à l'unité de communication de transmettre le message de relevé de compteur chiffré au serveur, et
dans lequel le message reconstruit comporte un bloc de longueur de message (LEN), le deuxième message de demande comporte un caractère de début (STX) et un caractère de fin (ETX), et ledit contrôleur (214, 314) est configuré pour déterminer si le message de demande chiffré comporte ou non des erreurs par la comparaison d'une longueur du message de demande chiffré identifiée par l'intermédiaire du caractère de début et du caractère de fin à une longueur de message comprise dans le bloc de longueur de message,
dans lequel normal signifie que la deuxième chaîne de caractères chiffrée et la chaîne de caractères sont identiques.

2. Système de relevé de compteur de consommation selon la revendication 1, dans lequel le premier message de demande comporte un premier bloc de message (MSG1) indiquant un type d'informations demandées et un deuxième bloc de message (MSG2) indiquant un emplacement d'un foyer dans lequel le compteur de consommation est installé, et le deuxième bloc de message est compris dans le premier intervalle.

3. Système de relevé de compteur de consommation selon la revendication 1 ou 2, dans lequel le premier message de demande comporte un troisième bloc de message (MSG3) indiquant un type du compteur de consommation et un quatrième bloc de message (MSG4) comportant des informations de temps, et le troisième bloc de message et le quatrième bloc de message sont compris dans le premier intervalle.

4. Système de relevé de compteur de consommation selon l'une quelconque des revendications 1 à 3, dans lequel le premier message de demande comporte en outre une valeur de somme de contrôle (CKS) pour un troisième intervalle (C) comportant le premier intervalle (A), et le contrôleur détermine si le message de demande chiffré présente ou non des erreurs par l'intermédiaire de la valeur de somme de contrôle comprise dans le troisième intervalle du message reconstruit.

5. Système de relevé de compteur de consommation selon l'une quelconque des revendications 1 à 4, dans lequel, lorsqu'il est déterminé que le message de demande chiffré est anormal, le contrôleur augmente un compte préinitialisé et, lorsque le compte dépasse une valeur prédéterminée, fournit une alarme au serveur ou à l'extérieur.

6. Système de relevé de compteur de consommation selon l'une quelconque des revendications 1 à 5, dans lequel l'algorithme de chiffrement unidirectionnel est un algorithme utilisant une fonction de hachage.

7. Système de relevé de compteur de consommation selon l'une quelconque des revendications 1 à 6, dans lequel l'algorithme de chiffrement unidirectionnel est l'un parmi Message-Digest algorithm 5 (MD5), Search Hash Algorithm (SHA), bcrypt, Password-Based Key Derivation Function2 (PBKDF2), et scrypt.

8. Système de relevé de compteur de consommation selon l'une quelconque des revendications 1 à 7, dans lequel le serveur génère le message de demande chiffré par la réalisation d'une opération OU exclusif sur le deuxième message de demande et N1 (N1 étant un nombre naturel) clés symétriques.

9. Système de relevé de compteur de consommation selon l'une quelconque des revendications 1 à 8, dans lequel le serveur génère le message de demande chiffré par la réalisation de deux, ou plus, types différents d'opérations bit à bit.

10. Système de relevé de compteur de consommation selon la revendication 1, dans lequel l'opération bit à bit comporte un mouvement de bits consistant à déplacer chacun d'un nombre prédéterminé de bits dans une direction et une transposition de bits consistant à relocaliser un emplacement de chaque bit dans un ordre prédéfini.

11. Système de relevé de compteur de consommation selon la revendication 9 ou 10, dans lequel l'opération bit à bit comporte au moins deux opérations bit à bit parmi une opération OU exclusif, un mouvement de bits consistant à déplacer chacun d'un nombre prédéterminé de bits dans une direction et une transposition de bits consistant à relocaliser un emplacement de chaque bit dans un ordre prédéfini.

12. Système de relevé de compteur de consommation selon l'une quelconque des revendications 1 à 11, dans lequel le serveur insère uniquement L (L étant un nombre naturel) caractères dans la première chaîne de caractères chiffrée dans le deuxième intervalle.

13. Système de relevé de compteur de consommation selon l'une quelconque des revendications 1 à 12, dans lequel le serveur génère le message de demande chiffré par la réalisation de l'opération bit à bit sur des parties restantes du deuxième message de demande autres que le caractère de début et le caractère de fin.

14. Procédé de communication de données de compteur, le procédé comprenant :
l'écriture d'un premier message de demande comportant des informations spécifiques au compteur de consommation spécifiant un compteur de consommation (110, 1210, 1210a, 1210b) par un serveur (120, 1220) ;
la génération d'une première chaîne de caractères chiffrée (S402) par le chiffrement d'une partie correspondant à un premier intervalle dans le premier message de demande par l'intermédiaire d'un algorithme de chiffrement unidirectionnel par le serveur ;
la génération d'un deuxième message de demande par l'insertion de l'intégralité ou d'une partie de la première chaîne de caractères chiffrée dans un deuxième intervalle dans le premier message de demande par le serveur ;
la génération d'un message de demande chiffré par la réalisation d'une opération bit à bit sur une partie du deuxième message de demande M1, M1 étant un nombre naturel, fois selon une première séquence par le serveur;
la réception du message de demande chiffré par le compteur de consommation;
la génération d'un premier message reconstruit par la réalisation inversement de l'opération bit à bit sur le message de demande chiffré M1 fois selon une première séquence inverse opposée à la première séquence par le compteur de consommation;
la génération d'une deuxième chaîne de caractères chiffrée par le chiffrement de la partie correspondant au premier intervalle dans le premier message reconstruit par l'intermédiaire de l'algorithme de chiffrement unidirectionnel par le compteur de consommation;
la détermination (S408, S508) si le message de demande chiffré est ou non normal par la comparaison d'une première chaîne de caractères à comparer correspondant au deuxième intervalle dans le premier message reconstruit à l'intégralité ou à une partie de la deuxième chaîne de caractères chiffrée par le compteur de consommation; et
la réalisation d'une fonction demandée par le premier message reconstruit par le compteur de consommation lorsque le message de demande chiffré est normal, et
dans lequel le premier message reconstruit comporte un bloc de longueur de message (LEN), le deuxième message de demande comporte un caractère de début (STX) et un caractère de fin (ETX), et le compteur de consommation détermine si le message de demande chiffré présente ou non des erreurs par la comparaison d'une longueur du message de demande chiffré identifiée par l'intermédiaire du caractère de début et du caractère de fin à une longueur de message comprise dans le bloc de longueur de message,
dans lequel normal signifie que la deuxième chaîne de caractères chiffrée et la première chaîne de caractères sont identiques.

15. Procédé selon la revendication 14, comprenant en outre :
la génération d'un premier message de relevé de compteur par l'insertion d'un résultat de la fonction demandée par le premier message reconstruit dans les données de compteur par le compteur de consommation;
la génération d'une troisième chaîne de caractères chiffrée par le chiffrement d'une partie correspondant à un troisième intervalle dans le premier message de relevé de compteur par l'intermédiaire de l'algorithme de chiffrement unidirectionnel par le compteur de consommation;
la génération d'un deuxième message de relevé de compteur par l'insertion d'une partie ou de l'intégralité de la troisième chaîne de caractères chiffrée dans un quatrième intervalle dans le premier message de relevé de compteur par le compteur de consommation;
la génération d'un message de relevé de compteur chiffré par la réalisation de l'opération bit à bit sur une partie du deuxième message de relevé de compteur M2 (M2 étant un nombre naturel) fois selon une deuxième séquence par le compteur de consommation; et
la transmission du message de relevé de compteur chiffré au serveur par le compteur de consommation.
